# EUROPEAN PATENT SPECIFICATION

(11) **EP 1 299 499 B1**
(45) Date of publication and mention of the grant of the patent: **06.09.2006**
(21) Application number: 00952148.5
(22) Date of filing: 13.07.2000
(51) Int. Cl.: C09K 5/18, A47J 36/28

(54) **METHODS AND REACTION MIXTURES FOR CONTROLLING EXOTHERMIC REACTIONS**
VERFAHREN UND REAKTIONSGEMISCHE ZUR STEUERUNG EXOTHERMER REAKTIONEN
PROCEDES ET MELANGES REACTIONNELS SERVANT A CONTROLER DES REACTIONS EXOTHERMIQUES

(43) Date of publication of application: 09.04.2003
(73) Proprietor: THE PROCTER & GAMBLE COMPANY, Cincinnati, Ohio 45202 (US)
(72) Inventor: LI, Yu-jun, Kobe 658-0032 (JP); MAO, Mark Hsiang-Kuen, Elk Grove - California 95758 (JP)
(74) Representative: Peet, Jillian Wendy
(86) International application number: PCT/US2000/019079
(87) International publication number: WO 2002/006421

(56) References cited:
- FR-A- 2 065 782
- GB-A- 2 233 081
- US-A- 3 535 246
- US-A- 3 585 982
- US-A- 3 766 079
- US-A- 3 903 011
- US-A- 3 937 634
- US-A- 5 248 486
- US-A- 5 542 418
- US-A- 5 935 486

## Description

### TECHNICAL FIELD

The present invention relates to reaction mixtures that include exothermic generating particles having a water soluble coating encasing a portion of the particles, and optionally, an aqueous solution, and a buffer. The reaction mixtures are especially suited to generate heat in a controllable manner. Apparatuses and methods that use these reaction mixtures are also disclosed.

### BACKGROUND OF THE INVENTION

Self contained exothermic reaction mixtures that are initiated by the addition of an aqueous solution have been used for many years to produce heat The heat generated by the exothermic reaction can be used for various purposes. For example, many consumer products utilize exothermic reactions for heating. Certain food products are sold with a self contained exothermic reaction mixture. An aqueous solution, typically water, is added to the exothermic reaction mixture. This initiates the reaction, which generates heat warming the food product. Other consumer products, such as portable heating pads, glove and sock warmers, etc., utilize an exothermic reaction mixture for heating.

A self contained exothermic reaction is an inexpensive, relatively safe, and portable alternative to heating with a combustion or an electrical source. But these reactions have one substantial problem, they are hard to control. For example, it has been difficult to design a reaction system that is self contained, and runs at a constant temperature for an extended period of time. Likewise, it is difficult to design a reaction system that will run at one temperature for a first period of time, then change to a second temperature for a second period of time. It is axiomatic that one cannot easily control the delivery of heat to the desired source without controlling the temperature of the reaction system.

Thus, there exists a need for improved exothermic reaction mixtures and apparatuses for providing heat. These improved methods and apparatuses should overcome the problems discussed above. Specifically, they should not require combustion or electricity, but they should provide heat in a controllable manner. Moreover, these improved methods and apparatuses should be portable and relatively inexpensive.

### SUMMARY OF THE INVENTION

The present invention is directed to a reaction mixture comprising exothermic generating particles comprising a water soluble coating that encases a portion of the particles. Optionally, the reaction mixture further comprises an aqueous solution, and a buffer.

In one aspect of this invention the exothermic generating particles and an aqueous solution are mixed together, and the temperature of the reaction mixture increases to a Set Temperature that is greater than about 35°C and less than about 75°C within less than 20 minutes. More preferably, the reaction mixture remains within 15°C of the Set Temperature for at least about 45 minutes.

The exothermic generating particles of the present invention are selected from the group consisting of uncomplexed metals, metal salts, metal oxides, metal hydroxides, metal hydrides and mixtures thereof. The metals are selected from the group consisting of beryllium, magnesium, lithium, sodium, calcium, potassium, iron, copper, zinc, aluminum and mixtures thereof. And the water soluble coating for these exothermic generating particles comprises a water soluble material selected from the group consisting of water-soluble alkylene glycols, water-soluble alcohols, and mixtures thereof.

There is further provided in the present invention a process for generating heat comprising the steps of: providing exothermic generating particles comprising a water soluble coating that encases a portion of the particles; providing an aqueous solution; and adding the aqueous solution to the coated exothermic generating particles.

In yet another aspect of this invention there is provided an apparatus for generating heat comprising a container and exothermic generating particles comprising a water soluble coating that encases a portion of the particles.

The methods and apparatuses of this invention provide portable and inexpensive ways to produce heat in a controllable manner. The devices can be relatively small while operating in a controllable manner for an extended period of time. For example, a reaction mixture can be designed to deliver heat at a predetermined temperature for an extended period of time at a relatively controlled rate. Moreover, using the reaction mixtures of the present invention heat can be delivered at a first temperature, then the reaction mixture can change to a different temperature for a second period of time.

The apparatuses of this invention can be used to deliver a variety of useful compounds to the surrounding air, and to clothes, carpet, pets, skin and many other surfaces. Moreover, the apparatuses of this invention can be combined with color and light to improve the aesthetic qualities, and ultimately, improve the overall experience for the user of the apparatus.

### BRIEF DESCRIPTION OF THE DRAWINGS

While the specification concludes with claims particularly pointing out and distinctly claiming the invention, it is believed that the invention will be better understood from the following description of preferred embodiments which is taken in conjunction with the accompanying drawings in which:
Fig. 1 is a graphical representation of two controlled reactions with a Set Temperature of about 50°C using reaction mixtures according to the present invention, and an uncontrolled reaction;
Fig. 2 is a graphical representation of two controlled reactions with a Set Temperature of about 40°C using reaction mixtures according to the present invention, and an uncontrolled reaction; and
Fig. 3 is a schematic representation of an apparatus according to the present invention.

### DETAILED DESCRIPTION OF THE INVENTION

As noted, the present invention is directed to a reaction mixture comprising exothermic generating particles comprising a water soluble coating that encases a portion of the particles. Optionally, the reaction components further comprise a buffer, an aqueous solution or both. The reaction mixture can be used to generate heat in a controllable manner. Apparatuses that utilize the reaction mixtures taught herein are also disclosed.

### Reaction Mixture

In one aspect of this invention a reaction mixture is formed by mixing the exothermic generating particles with an aqueous solution components to initiate an exothermic reaction between the exothermic generating particles and the aqueous solution. The exothermic reaction generates heat, which elevates the temperature of the reaction mixture. The heat, more precisely, the elevated temperature of the reaction mixture, can be used to heat an object of the surrounding environment. As will be understood, the water soluble coating of the exothermic generating particles can be used to control the speed of the exothermic reaction, and the heat generated. The ability to control the amount of heat generated by the reaction mixture, without any external controls, allows for the controlled delivery of the heat.

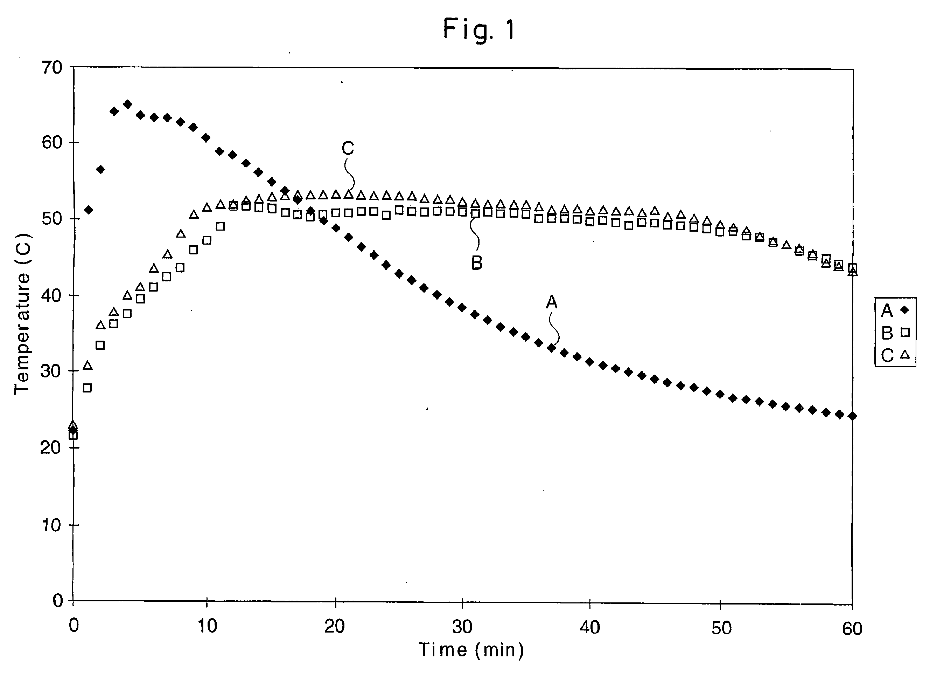

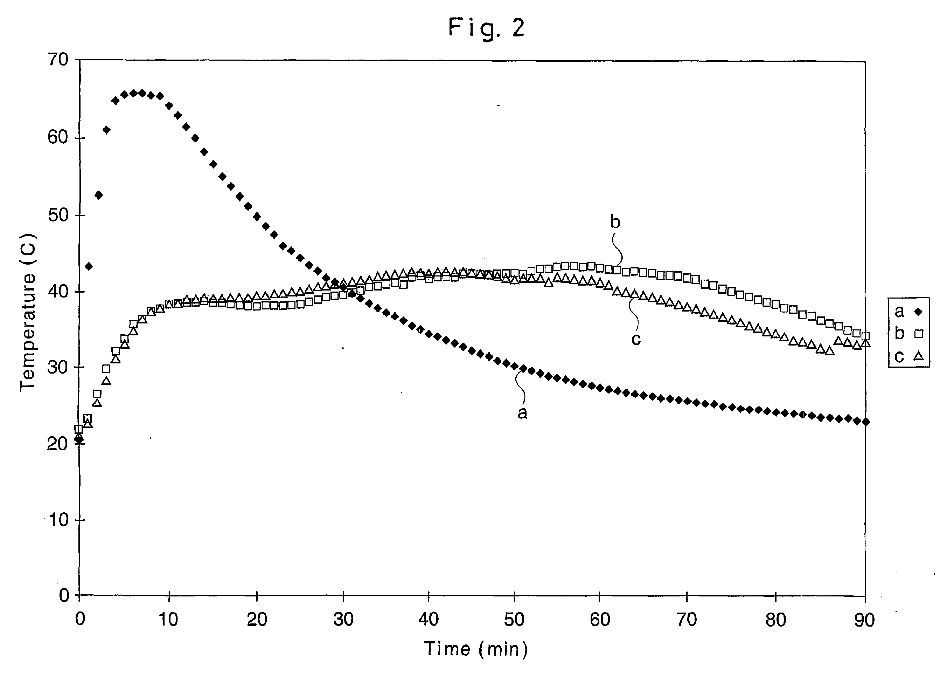

As is well known to those skilled in the art, chemical reactions can be difficult to control. Assuming a batch process, and putting aside thermodynamic considerations, the rate of an exothermic chemical reaction depends largely on the temperature and concentration of the reaction mixture. With no external controls, the temperature of an exothermic reaction mixture will rapidly increase during the early stages of the reaction. This is due largely to two factors, the concentration of the reactants is at its highest level, and as the reaction progresses heat is generated which raises the temperature of the reaction mixture, which, in turn, increases the rate of the reaction. As the reactants are depleted, the reaction slows, causing a precipitous decrease in the temperature of the reaction mixture. This effect if graphically illustrated in both Figures 1 and 2, specifically, lines "A" and "a" illustrate the temperature of an uncontrolled exothermic reaction mixture as a function of time. Figures 1 and 2 are discussed in greater detail below, but they clearly illustrate one problem addressed by the present invention. That is, the temperature of the reactions represented by Lines "A" and "a" of Figures 1 and 2, respectively, changes constantly. Moreover, the rate of change of the temperature is almost never constant.

By coating the exothermic generating particles as described in detail below, a batch, exothermic reaction mixture can be designed to provide constant heat over relatively long periods of time. And other control schemes can be easily designed by those skilled in the art, for example, a reaction mixture can be designed where the temperature increases gradually at a constant rate of increase for a relatively long period of time. Other control schemes will be apparent based on the following details.

In one such control scheme, a reaction mixture is prepared by mixing the exothermic generating particles and an aqueous solution to initiate an exothermic reaction. The temperature of the reaction mixture increases to a Set Temperature that is greater than 35°C and less than 75°C, preferably between 35°C and 60°C, and most preferably between 35°C and 50°C, within less than 20 minutes, preferably within less than 10 minutes and more preferably within less than 5 minutes. Preferably, the reaction mixture remains within 15°C, more preferably within 10°C, and even more preferably within 5°C of the Set Temperature for at least 45 minutes, preferably at least 60 minutes, and more preferably at least 90 minutes. It is understood that the term "remains within" as used herein, means the same as "±". For example, to "remain within 10°C" of a Set Temperature of 50°C, means the temperature can fluctuate between 40°C and 60°C. This control scheme is graphically illustrated in Figures 1 and 2 by Lines "B", "C", "b" and "c".

Figure 1 displays one "uncontrolled" exothermic reaction according to the prior art ("A") compared to two "controlled" reactions according to the present invention ("B" and "C"). The reaction components, and the resulting reaction mixture are given in Table 1 and summarized in Table 2. As can be seen, magnesium powder is used as the exothermic generating particles, and a citric acid buffer is used. The exothermic generating particles of reaction mixture "A" are uncoated (Premix 2), while the exothermic generating particles of reaction mixtures "B" and "C" include both uncoated particles (Premix 2), and particles coated with Polyethylene Glycol ("PEG") of different molecular weights (Premix 1). The weight of the reactants (excluding the coating material) was held constant in these three reaction mixtures. That is, the weight of the magnesium exothermic generating particles and the citric acid buffer was held relatively constant in all three reaction mixtures, see Table 2. Moreover, the magnesium exothermic generating particles and the citric acid buffer was added to 100.0 grams of water to form each of the reaction mixtures.

**Table 1**

| | **A** | **B** | **C** |
|---|---|---|---|
| **INGREDIENT** | **Wt. %** | **Wt. %** | **Wt. %** |
| **Premix 1** | | | |
| PEG 600 | 0.0 | 15.0 | 13.5 |
| PEG1000 | 0.0 | 5.0 | 4.5 |
| Magnesium | 0.0 | 5.0 | 4.5 |
| Citric acid | 0.0 | 32.5 | 29.3 |
| **Premix 2** | | | |
| Magnesium | 13.3 | 5.7 | 6.4 |
| Citric acid | 86.7 | 36.8 | 41.8 |
| Total Wt. % | 100 | 100 | 100 |

**Table 2**

| | **A** | **B** | **C** |
|---|---|---|---|
| **INGREDIENT** | **Wt. (g)** | **Wt. (g)** | **Wt. (g)** |
| Coating | 0.0 | 4.8 | 4.3 |
| Mg | 2.6 | 2.6 | 2.6 |
| Citric Acid | 16.6 | 16.6 | 17.1 |
| Water | | | |
| **Total Wt. (g)** | 19.2 | 24.0 | 24.0 |

As discussed briefly above, Line "A" is a typical graph of temperature v. time for an uncontrolled exothermic reaction. The temperature rises rapidly at first to a maximum of greater than 65°C. And then, as the reaction components are consumed, the temperature begins to decrease along a logarithmic curve. And within approximately 35 minutes, the reaction has cooled to within 5°C of the initial temperature (room temperature). At no time during this first 35 minutes of the reaction illustrated by Line "A" does the temperature remain constant for more than a few minutes.

In sharp contrast, the reaction mixtures represented by lines "B" and "C" of Figure 1, increase to the Set Temperature of 50°C within 10 minutes. The reaction temperatures then level off and remain within 5°C of the Set Temperature for at least 45 minutes.

Similarly, Figure 2 displays one "uncontrolled" exothermic reaction according to the prior art ("a") compared to two "controlled" reactions according to the present invention ("b" and "c"). The reaction components, and the resulting reaction mixture are given in Table 3 and summarized in Table 4. Magnesium powder is used as the exothermic generating particles, and a citric acid buffer is used. The exothermic generating particles of reaction mixture "a" are uncoated (Premix 2), while the exothermic generating particles of reaction mixtures "b" and "c" include both uncoated particles (Premix 2), and particles coated with Polyethylene Glycol ("PEG") of different molecular weights (Premix 1). The weight of the reactants (excluding the coating material) was held constant in these three reaction mixtures. That is weight of the magnesium exothermic generating particles and the citric acid buffer was held relatively constant in all three reaction mixtures, see Table 4. Moreover, the magnesium exothermic generating particles and the citric acid buffer was added to 100.0 grams of water to form each of the reaction mixtures.

**Table 3**

| | **a** | **b** | **c** |
|---|---|---|---|
| **INGREDIENT** | **Wt. %** | **Wt. %** | **Wt. %** |
| **Premix 1** | | | |
| PEG 600 | 0.0 | 13.0 | 13.4 |
| PEG 1000 | 0.0 | 21.3 | 22.0 |
| PEG 2000 | 0.0 | 7.1 | 7.3 |
| Magnesium | 0.0 | 5.0 | 4.7 |
| Citric acid | 0.0 | 32.3 | 30.5 |
| **Premix 2** | | | |
| Magnesium | 13.3 | 2.8 | 2.9 |
| Citric acid | 86.7 | 18.5 | 19.0 |
| **Total Wt. %** | 100 | 100 | 100 |

**Table 4**

| | **a** | **b** | **c** |
|---|---|---|---|
| **INGREDIENT** | **Wt. (g)** | **Wt. (g)** | **Wt. (g)** |
| Coating | 0.0 | 10.5 | 10.4 |
| Mg | 2.0 | 2.0 | 1.9 |
| Citric Acid | 12.9 | 12.9 | 12.2 |
| **Total Wt. (g)** | 14.9 | 25.4 | 24.5 |

As discussed briefly above, Line "a" is a typical graph of temperature v. time for an uncontrolled exothermic reaction. The temperature rises rapidly at first, and then as the reaction components are consumed, the temperature begins to decrease along a logarithmic curve. It takes approximately 15 minutes for the temperature of reaction mixture "a" to overshoot and cool back down to 55°C, which is within 15°C of the Set temperature, 40°C. The reaction mixture remains within 15°C of 40°C for only about 40 minutes later when the reaction dips below 25°C. At no time during this first 55 minutes of the reaction illustrated by Line "a" does the temperature remain constant for more than a few minutes.

In sharp contrast, the reaction mixtures represented by lines "b" and "c" of Figure 2, increase to the Set Temperature of about 40°C within about 10 minutes. The reaction temperatures then level off and remain within 5°C of the Set Temperature for at least about 60 minutes.

It is understood that the control scheme depicted in Figures 1 and 2, that is, where the reaction mixture rises to a Set Temperature and the temperature remains relatively constant for an extended period of time, is only one of many possible control schemes covered by the present invention. By way of example, another control scheme occurs when the exothermic generating particles and an aqueous solution are mixed together, the temperature of the reaction mixture increases to a First Set Temperature and remains within 15°C, preferably within 10°C, and more preferably within 5°C of the First Set Temperature for a first period of time and then moves to a Second Set Temperature and remains within 15°C, preferably within 10°C, and more preferably within 5°C of the Second Set Temperature for a second period of time. Preferably, the first period of time is at least about 15 minutes, preferably at least about 20 minutes, and the second period of time is at least about 15 minutes, preferably at least about 20 minutes. And it is also preferred that the First Set Temperature be at least about 10°C, preferably at least about 15°C, greater than the Second Set Temperature, or alternatively, the First Set Temperature is at least about 10°C, preferably at least about 15°C, less than the Second Set Temperature.

Yet another example of a control scheme of the present invention is when the reaction components are mixed together the temperature of the reaction mixture increases at an actual rate of increase that is measured in °C/minute, and the actual rate of increase remains within 0.5°C/minute, preferably within 0.1°C/minute, and more preferably within 0.01°C/minute of a predetermined rate of increase for at least about 45 minutes, preferably at least about 60 minutes, and more preferably at least about 90 minutes. Preferably the predetermined rate of increase is less than 2°C/minute, preferably less than 1.5°C/minute, and more preferably less than 1°C/minute.

### Reaction Components

Turning now to the reaction components, which include as a minimum, exothermic generating particles comprising a water soluble coating that encases a portion of the particles. Preferably, the reaction components further comprise a buffer, an aqueous solution or both.

### Exothermic Generating Particles

The exothermic generating particles of the present invention are selected from the group consisting of uncomplexed metals, metal salts, metal oxides, metal hydroxides, metal hydrides and mixtures thereof. The metals are selected from the group consisting of beryllium, magnesium, lithium, sodium, calcium, potassium, iron, copper, zinc, aluminum and mixtures thereof. These particles may also be selected from the group consisting of beryllium hydroxide, beryllium oxide, beryllium oxide monohydrate, lithium aluminum hydride, calcium oxide, calcium hydride, potassium oxide, magnesium chloride, magnesium sulfate, aluminum bromide, aluminum iodide, sodium tetraborate, sodium phosphate and mixtures thereof. The concentration of the exothermic generating particles in the reaction mixture is from 3% to 70%, preferably from 5% to 65%, and more preferably from 8% to 60%, by weight, of the reaction mixture.

It is preferred, although not required, that the exothermic generating particles (without the coating) have an average particle diameter of from 10 microns to 1000 microns, preferably from 100 microns to 500 microns, and more preferably from 200 microns to 400 microns. In the present reaction mixture, the exothermic generating particles can be in the form of a dry powder, suspended in a gel, or suspended in a non-aqueous solution.

### Water Soluble Coating

Controlling the temperature of the reaction mixture as a function of time is one of the objects of this invention, and control is accomplished largely by coating at least a portion of the exothermic generating particles. While not wanting to be bound by any one theory, it is believed that the coated exothermic generating particles cannot react with the aqueous solution until the coating dissolves. As the coating on the exothermic generating particles begins to dissolve, the exposed particles begin to react and generate heat. In light of this mechanism, one can easily see the benefit of using a mixture of exothermic generating particles having different coatings, different thickness of coatings, or both. Likewise, it is often preferred to include a small amount of uncoated exothermic generating particles to help raise the temperature during the early stages of the reaction. The concentration of the water soluble coating material in the reaction mixture is from 3% to 70%, preferably from 5% to 65%, and more preferably from 8% to 60%, by weight, of the reaction mixture.

Hence, it is understood that while a portion of the exothermic generating particles must be coated with the water soluble coatings disclosed herein, not all of the particles need to be coated. Moreover, some particles may have different thicknesses, and the coatings may be different. More specifically, the exothermic generating particles can be selected from the group consisting of uncoated particles, coated particles and mixtures thereof, preferably, the exothermic generating particles comprise particles selected from the group consisting of uncoated particles, first coated particles, second coated particles and mixtures thereof, wherein the first coated particle differ from the second coated particles in the coating material, the thickness of the coating or both.

The coating for these exothermic generating particles should be a water soluble material that is preferably selected from the group consisting of natural water-soluble polymers, inorganic water-soluble polymers, synthetic water-soluble polymers, semi-synthetic water-soluble polymers, polymers of plant origin, polymers of microorganism origin, polymers of animal origin, starch polymers, cellulose polymers, alginate polymers, vinyl polymers, polyoxyethylene polymers, acrylate polymers, and mixtures thereof. More specifically, the coating for the exothermic generating particles comprises a water soluble material selected from the group consisting of gum arabic, gum tragacanth, galactan, gum guar, carob-seed gum, karaya gum, carrageenan, pectin, agar, quince seed, alge-colloid, starch (from corn, potato, etc), glycyrrhizic acid, gum xanthan, dextran, succin-glucane, pullulan, collagen, casein, albumin, gelatin, carboxy-methyl starch, methyl-hydroxypropyl starch, methyl-cellulose, nitro-cellulose, ethyl-cellulose, methyl-hydroxypropyl-cellulose, hydroxy-ethyl-cellulose, sodium cellulose sulfate, hydroxypropyl-cellulose, sodium carboxy-methyl-cellulose, crystalline cellulose, cellulose powder, sodium alginate, propylene glycol alginate ether, polyvinyl alcohol, poly (vinyl methyl ether), poly-vinyl-pyrrolidone, carboxy-vinyl polymers, alkyl co-polymers of acrylic acid and methacrylic acid, polyethylene glycol having a molecular weight between 200 and 100,000, preferably between 600 and 20,000, co-polymers of polyoxy-ethylene and polyoxy-propylene, sodium poly-acrylate, poly ehtylacrylate, poly acrylamide, polyethylene imine, cationic polymers, bentonite, aluminum magnesium silicate, hectorite, silicic anhydride, and mixtures thereof. Preferably, the coating comprises a material selected from the group consisting of water-soluble alkylene glycols, water-soluble alcohols, and mixtures thereof. And even more preferably coating is not flammable. Exemplary coatings useful in the present invention are listed below in Table 5.

**Table 5**

| Examples of natural water-soluble polymers | Examples of semi-synthetic water-soluble polymers |
|---|---|
| polymers of plant origin | starch-related polymers |
| • gum arabic | • carboxy-methyl starch |
| • gum tragacanth | • methyl-hydroxypropyl starch |
| • galactan | |
| • gum guar | cellulose-related polymers |
| • carob-seed gum | • methyl-cellulose |
| • karaya gum | • nitro-cellulose |
| • carrageenan | • ethyl-cellulose |
| • pectin | • methyl-hydroxypropyl-cellulose |
| • agar | • hydroxy-ethyl-cellulose |
| • quince seed | • sodium cellulose sulfate |
| • alge-colloid | • hydroxypropyl-cellulose |
| • starch (from corn, potato, etc.) | • sodium carboxy-methyl-cellulose |
| • glycyrrhizic acid | • cellulose, crystalline |
| | • cellulose, powder |
| polymers of microorganism origin | |
| • gum xanthan | alginate-related polymers |
| • dextran | • sodium alginate |
| • succin-glucane | • propylene glycol alginate ester |
| • pullulan | |
| | |
| polymers of animal origin | |
| • collagen | |
| • casein | |
| • albumin | |
| • gelatin | |
| | |

| Examples of synthetic water-soluble polymers | examples of inorganic water-soluble polymers |
|---|---|
| vinyl-related polymers | • bentonite |
| • polyvinyl alcohol | • aluminum magnesium silicate |
| • poly (vinyl methyl ether) | • Laponite® |
| • poly-vinyl-pyrrolidone | • hectorite |
| • carboxy-vinyl polymers | • silicic anhydride |
| • alkyl co-polymers of acrylic acid & methacrylic acid | |
| | |
| polyoxyethylene-related polymers | |
| • PEG 200 | |
| • PEG 600 | |
| • PEG 1000 | |
| • PEG 2000 | |
| • PEG 4000 | |
| • PEG 6000 | |
| • PEG 20000 | |
| | |
| co-polymers of polyoxy-ethylene & polyoxy-propylene | |
| acrylate-related polymers | |
| • sodium poly-acrylate | |
| • poly ehtylacrylate | |
| • poly acrylamide | |
| • polyethylene imine | |
| • cationic polymers | |

As will be understood by those skilled in the art, the water solubility of the coatings discussed above vary across a broad band. And in general, the water solubility is dependent on temperature. Thus, to control the temperature of a reaction mixture a skilled artisan can easily select coatings that dissolve at the desired Set Temperature and vary the thickness of the coatings such that exothermic generating particles are exposed to the aqueous solution at various times. Another method of control is to use different coatings that dissolve at different rates. By this method, certain particles will be exposed early in the reaction, while other exothermic generating particles will take longer to be exposed. Other methods of coating the exothermic generating particles to control an exothermic reaction will be apparent to those skilled in the chemical arts. It is understood that in any control scheme, it may be preferred, although not necessary, to include some particles that are not coated.

The coating can be applied to the exothermic generating particles by any appropriate means. The easiest method is to soften or melt the coating material and mix it with the desired amount of exothermic generating particles. To achieve different coating thicknesses, separate batches of particles and coating materials can be prepared. For example, 100g of particles can be mixed with 100g of PEG 600, and separately, 100g of exothermic generating particles can be mixed with 200g of PEG 600. The two batches of particles can then be combined. The thickness of the coating can be determined by a simple material balance using the average particle size of the exothermic generating particles and the amount of coating material added thereto. If a more precise measurement is desired, spectroscopic analysis of the particles before and after coating can provide a very accurate particle size distribution. Spectroscopic particle size analyzers are well known.

While it is necessary to coat at least a portion of the exothermic generating particles of the reaction mixture, the optional buffer may or may not be coated. More specifically, the optional buffer can be coated along, with the exothermic generating particles, it can be coated separately from the exothermic generating particles, or it can be added without any coating. Combinations of these choices will also produce acceptable results in many cases. Therefore, coating components other than the exothermic generating particles is the prerogative of the formulator.

### Aqueous Solution

An optional component of the present reaction mixtures is an aqueous solution. The aqueous solution performs two functions in the reaction mixture. Specifically, it dissolves the water soluble coating on the exothermic particles and then reacts with the exothermic generating particles to generate heat. It is understood that the amount of the aqueous solution is quite flexible. While a sufficient amount of the aqueous solution must be present to dissolve the coating and to react with the exothermic particles, excess aqueous solution is often acceptable and may even be desirable. In fact, excess aqueous solution acts as a heat sink for the reaction system. In this capacity the aqueous solution can, in some circumstances, be used to control the maximum temperature of a given reaction system. The aqueous solution, however, is generally not useful for controlling the time verses temperature curves for the reaction system as described above. Thus, those skilled in the art will be able to select the proper amount of aqueous solution for a given reaction system.

The most common and most preferred aqueous solution is water and solutions containing water. Monohydric alcohols and other low molecular weight liquids are suitable for use in the present invention. The only criteria for an "aqueous solution" is that it dissolve the water soluble coatings described above, and that it react with the chosen exothermic generating particles. The concentration of aqueous solution in the reaction mixture is from 30% to 97%, preferably from 50% to 95%, and more preferably from 60% to 90%, by weight, of the reaction mixture.

### Buffer

The reaction mixtures of the present invention will often include, as an option component, a buffer. The buffer can provide a variety of benefits, such as acceleration or deceleration of the exothermic reaction, and pH control at the end of the reaction. It is well known that certain exothermic generating particles will react faster than others. A buffer can speed up or slow down a reaction mixture. It is understood, however, that even with a buffer, uncontrolled exothermic reactions will generally follow the time vs. temperature curves depicted in Lines "A" and "a" of Figures 1 and 2. Thus, the buffer works to provide a favorable thermodynamic environment for the reaction mixture, but the buffer does not control the time vs. temperature profile of the reaction. With regard to pH, it is often desirable to control the pH both during the reaction and at the end of the reaction. During the reaction, the pH can contribute to the favorable thermodynamic environment as discussed above, and it can regulate the final pH of the reaction mixture when the exothermic reaction is nearing completion. The final pH may be important because at certain pHs the reaction products will precipitate leaving a relatively clear solution. The clear solution may be desirable and it can signal the end of the reaction. Regardless, a buffer may help the formulator of the reaction mixtures disclosed herein.

Preferably, if a buffer is present in the reaction mixtures of this invention, the ratio by weight of the exothermic generating particles to the buffer is in the range of from 1000:1 to 1:1000, preferably from 500:1 to 1:500, and more preferably from 200:1 to 1:200. And the buffer is preferably selected from the group consisting of citric acid, malic, acid, fumaric acid, succinic acid, tartaric acid, formic acid, acetic acid, propanoic acid, butyric acid, valeric acid, oxalic acid, malonic acid, glutaric acid, adipic acid, glycolic acid, aspartic acid, pimelic acid, maleic acid, phthalic acid, isophthalic acid, terphthalic acid, glutamic acid, lactic acid, hydroxyl acrylic acid, alpha hydroxyl butyric acid, glyceric acid, tartronic acid, salicylic acid, gallic acid, mandelic acid, tropic acid, ascorbic acid, gluconic acid, cinnamic acid, benzoic acid, phenylacetic acid, nicotinic acid, kainic acid, sorbic acid, pyrrolidone carboxylic acid, trimellitic acid, benzene sulfonic acid, toluene sulfonic acid, potassium dihydrogen phosphate, sodium hydrogen sulfite, sodium dihydrogen phosphate, potassium hydrogen sulfite, sodium hydrogen pyrosulfite, acidic sodium hexametaphosphate, acidic sodium pyrophosphate, acidic potassium pyrophosphate, sulfamic acid, ortho-phosphoric acid, pyro-phosphoric acid and mixtures thereof.

### Apparatus

In yet another aspect of this invention there is provided an apparatus for generating heat, the apparatus comprises a container and exothermic generating particles comprising a water soluble coating that encases a portion of the particles. The apparatus optionally further comprises a buffer, an aqueous solution, or combinations of these. The reaction components for use in the apparatuses of the present invention are the same as those discussed above. The apparatus of the present invention is preferably a self contained and portable device in which an exothermic reaction is conducted. Preferably, the apparatus container should have at least one vent or opening to emit the volatile components that are evolved during the exothermic reaction. Moreover, the container should be constructed of a material that can withstand the maximum temperature of the exothermic reaction. Many materials fulfill this requirement because the maximum temperature of the reaction might be as low as 35°C, higher temperature reaction might require higher temperature tolerance. Glass, plastic, styrofoam, metal, liquid impermeable paper, and many other materials are suitable for use in the present invention. The container can be clear, transparent, translucent, or opaque. In the present apparatuses, the exothermic generating particles can be in the form of a dry powder, suspended in a gel, or suspended in a non-aqueous solution.

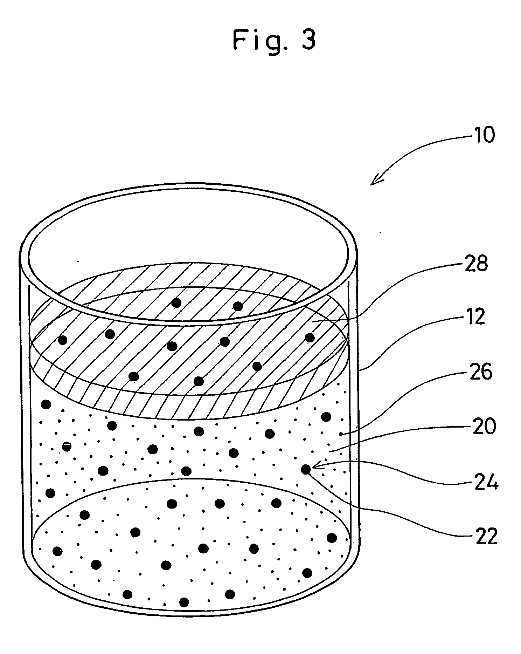

Figure 3 is a schematic representation of an apparatus 10 according to the present invention. Apparatus 10 comprises container 12 and reaction mixture 20, which includes exothermic generating particles 22 with coating 24. Reaction mixture 20 further comprises buffer particles 26 and an aqueous solution 28.

The reaction mixture used in the apparatuses of the present invention should be controllable as discussed above. That is, when the reaction components are mixed together in the present apparatuses, the reaction mixture should increase in temperature to a Set Temperature that is greater than 35°C and less than 75°C, preferably between 35°C and 60°C, and most preferably between 35°C and 50°C, within less than 20 minutes, preferably within less than 10 minutes and more preferably within less than 5 minutes. Preferably, the reaction mixture within the apparatus remains within 15°C of the Set Temperature for at least 45 minutes, preferably at least 60 minutes, and more preferably at least 90 minutes. Other control sequences, such as those describe above in conjunction with the reaction mixture are contemplated for use in the present apparatus.

### EXAMPLES

The following examples illustrate the reaction mixtures of the present invention, but are not necessarily meant to limit or otherwise define the scope of the invention.

### Method of Coating the Exothermic Generating Particles

Exothermic generating particles are coated with polyethylene glycol as follows. A premix is made by combining magnesium powder and anhydrous citric acid (1:6.5 w/w, both components from Wako Chemicals). The premix is then added into melted polyethylene glycol. The melted polyethylene is a mixture of three different molecular weights, PEG 600 (from Union Carbide), PEG 1000 (from Wako Chemicals), and PEG 2000 (from Wako Chemicals). The melted PEG mixture is around 50°C. The mixture is then cooled at 5°C for 10 min to approximate 20-25°C. The product comprises PEG of three different molecular weights, magnesium powder and anhydrous citric acid powder, and is a gel with suspended particles.

## Claims

1. An exothermic reaction mixture that generates that by the addition of an aqueous solution comprising exothermic generating particles comprising a water soluble coating that encases a portion of the particles, wherein the coating comprises a material selected from the group consisting of water-soluble alkylene glycols, water-soluble alcohols, and mixtures thereof, and wherein the exothermic generating particles are selected from the group consisting of uncomplexed metals, metal salts, metal oxides, metal hydroxides, metal hydrides and mixtures thereof, wherein the metals are selected from the group consisting of beryllium, magnesium, lithium, sodium, calcium, potassium, iron, copper, zinc, aluminum and mixtures thereof.

2. The reaction mixture of claim 1, wherein the reaction mixture further comprise an aqueous solution.

3. The reaction mixture of claim 1, wherein the reaction mixture further comprise a buffer.

4. The reaction mixture of claim 2, wherein when the exothermic generating particles and the aqueous solution are mixed together, the temperature of the reaction mixture increases to a Set Temperature that is greater than 35°C and less than 75°C within less than 20 minutes.

5. The reaction mixture of claim 4, wherein the reaction mixture remains within 15°C, of the Set Temperature for at least about 45 minutes.

6. The reaction mixture of claim 1, wherein the exothermic generating particles have an average particle diameter of from 10 microns to 1000 microns.

7. The reaction mixture of claim 1, wherein the exothermic generating particles are selected from the group consisting of beryllium hydroxide, beryllium oxide, beryllium oxide monohydrate, lithium aluminum hydride, calcium oxide, calcium hydride, potassium oxide, magnesium chloride, magnesium sulfate, aluminum bromide, aluminum iodide, sodium tetraborate, sodium phosphate and mixtures thereof.

8. The reaction mixture of claim 3, wherein the buffer is selected from the group consisting of citric acid, malic, acid, fumaric acid, succinic acid, tartaric acid, formic acid, acetic acid, propanoic acid, butyric acid, valeric acid, oxalic acid, malonic acid, glutaric acid, adipic acid, glycolic acid, aspartic acid, pimelic acid, maleic acid, phthalic acid, isophthalic acid, terphthalic acid, glutamic acid, lactic acid, hydroxyl acrylic acid, alpha hydroxyl butyric acid, glyceric acid, tartronic acid, salicylic acid, gallic acid, mandelic acid, tropic acid, ascorbic acid, gluconic acid, cinnamic acid, benzoic acid, phenylacetic acid, nicotinic acid, kainic acid, sorbic acid, pyrrolidone carboxylic acid, trimellitic acid, benzene sulfonic acid, toluene sulfonic acid, potassium dihydrogen phosphate, sodium hydrogen sulfite, sodium dihydrogen phosphate, potassium hydrogen sulfite, sodium hydrogen pyrosulfite, acidic sodium hexametaphosphate, acidic sodium pyrophosphate, acidic potassium pyrophosphate, sulfamic acid, ortho-phosphoric acid, pyro-phosphoric acid and mixtures thereof.

9. The reaction mixture of claim 3, wherein the ratio by weight of the exothermic generating particles to the buffer is in the range of from 1000:1 to 1:1000.

10. The reaction mixture of claim 2, wherein when the exothermic generating particles and the aqueous solution are mixed together, the temperature of the reaction mixture increases at an actual rate of increase that is measured in °C/minute, and the actual rate of increase remains within 0.5°C/minute of a predetermined rate of increase for at least 45 minutes.

11. The reaction mixture of claim 10, wherein the predetermined rate of increase is less than 2°C/minute.

12. The reaction mixture of claim 1, wherein the exothermic generating particles comprise uncoated particles.

13. The reaction mixture of claim 12, wherein the exothermic generating particles comprise mixtures of uncoated particles, first coated particles, and second coated particles.

14. A process for generating heat, the process comprising the steps of:
a) providing the exothermic generating particles of claim 1; and
b) adding to the coated exothermic generating particles an aqueous solution.

15. The process of claim 14, further comprising the steps of:
c) providing a buffer; and
d) adding the buffer to the aqueous solution and the exothermic generating particles.

16. An apparatus for generating heat comprising a container and the exothermic generating particles of claim 1.

17. The apparatus of claim 16, wherein the reaction mixture further comprises a buffer.

18. The apparatus of claim 17, wherein a reaction mixture is created when the exothermic generating particles are mixed together with an aqueous solution, and the temperature of the reaction mixture increases to a Set Temperature that is greater than 40°C and less than 75°C within at least 20 minutes.

19. The apparatus of claim 18, wherein the reaction mixture remains within 15°C of the Set Temperature for at least 45 minutes.

20. The apparatus of claim 16, wherein the exothermic generating particles are in the form of a dry powder.

21. The apparatus of claim 16, wherein the exothermic generating particles are suspended in a gel, a non-aqueous liquid and mixtures thereof.

22. The reaction mixture of claim 2, wherein when the exothermic generating particles and the aqueous solution are mixed together, the temperature of the reaction mixture increases to a First Set Temperature and remains within 15°C of the First Set Temperature for a first period of time and then the temperature of the reaction mixture changes to a Second Set Temperature and remains within 15°C of the Second Set Temperature for a second period of time.

23. The reaction mixture of claim 22, wherein the first period of time is at least 15 minutes and the second period of time is at least 15 minutes.

24. The reaction mixture of claim 22, wherein the First Set Temperature is at least 10°C greater than the Second Set Temperature.

25. The reaction mixture of claim 22, wherein the First Set Temperature is at least 10°C less than the Second Set Temperature.

## Patentansprüche

1. Exotherme Reaktionsmischung, die durch die Zugabe einer wässrigen Lösung, die Wärme erzeugende Teilchen umfasst, die eine wasserlösliche Beschichtung umfassen, die einen Abschnitt der Teilchen umschließt, Wärme erzeugt, wobei die Beschichtung ein Material umfasst, das ausgewählt ist aus der Gruppe, bestehend aus wasserlöslichen Alkylenglycolen, wasserlöslichen Alkoholen und Mischungen davon, und wobei die Wärme erzeugenden Teilchen ausgewählt sind aus der Gruppe, bestehend aus nicht komplexierten Metallen, Metallsalzen, Metalloxiden, Metallhydroxiden, Metallhydriden und Mischungen davon, wobei die Metalle ausgewählt sind aus der Gruppe, bestehend aus Beryllium, Magnesium, Lithium, Natrium, Calcium, Kalium, Eisen, Kupfer, Zink, Aluminium und Mischungen davon.

2. Reaktionsmischung nach Anspruch 1, wobei die Reaktionsmischung ferner eine wässrige Lösung umfasst.

3. Reaktionsmischung nach Anspruch 1, wobei die Reaktionsmischung ferner einen Puffer umfasst.

4. Reaktionsmischung nach Anspruch 2, wobei die Temperatur der Reaktionsmischung bei Vermischen der Wärme erzeugenden Teilchen und der wässrigen Lösung innerhalb von weniger als 20 Minuten auf eine festgelegte Temperatur ansteigt, die mehr als 35 °C und weniger als 75 °C beträgt.

5. Reaktionsmischung nach Anspruch 4, wobei die Reaktionsmischung mindestens etwa 45 Minuten lang innerhalb von 15 °C der festgelegten Temperatur verbleibt.

6. Reaktionsmischung nach Anspruch 1, wobei die Wärme erzeugenden Teilchen einen durchschnittlichen Teilchendurchmesser von 10 Mikrometer bis 1.000 Mikrometer aufweisen.

7. Reaktionsmischung nach Anspruch 1, wobei die Wärme erzeugenden Teilchen ausgewählt sind aus der Gruppe, bestehend aus Berylliumhydroxid, Berylliumoxid, Berylliumoxid-Monohydrat, Lithiumaluminiumhydrid, Calciumoxid, Calciumhydrid, Kaliumoxid, Magnesiumchlorid, Magnesiumsulfat, Aluminiumbromid, Aluminiumiodid, Natriumtetraborat, Natriumphosphat und Mischungen davon.

8. Reaktionsmischung nach Anspruch 3, wobei der Puffer ausgewählt ist aus der Gruppe, bestehend aus Citronensäure, Äpfelsäure, Fumarsäure, Bernsteinsäure, Weinsäure, Ameisensäure, Essigsäure, Propansäure, Buttersäure, Valeriansäure, Oxalsäure, Malonsäure, Glutarsäure, Adipinsäure, Glycolsäure, Asparaginsäure, Pimelinsäure, Maleinsäure, Phthalsäure, Isophthalsäure, Terephtalsäure, Glutaminsäure, Milchsäure, Hydroxyacrylsäure, alpha-Hydroxybuttersäure, Glycerinsäure, Tartronsäure, Salicylsäure, Gallussäure, Mandelsäure, Tropasäure, Ascorbinsäure, Gluconsäure, Zimtsäure, Benzoesäure, Phenylessigsäure, Nicotinsäure, Kaininsäure, Sorbinsäure, Pyrrolidoncarbonsäure, Trimelithsäure, Benzolsulfonsäure, Toluolsulfonsäure, Kaliumdihydrogenphosphat, Natriumhydrogensulfit, Natriumdihydrogenphosphat, Kaliumhydrogensulfit, Natriumhydrogenpyrosulfit, saurem Natriumhexametaphosphat, saurem Natriumpyrophosphat, saurem Kaliumpyrophosphat, Sulfaminsäure, Orthophosphorsäure, Pyrophosphorsäure und Mischungen davon.

9. Reaktionsmischung nach Anspruch 3, wobei das Gewichtsverhältnis der Wärme erzeugenden Teilchen zu dem Puffer im Bereich von 1000:1 bis 1:1000 liegt.

10. Reaktionsmischung nach Anspruch 2, wobei die Temperatur der Reaktionsmischung bei Vermischen der Wärme erzeugenden Teilchen und der wässrigen Lösung bei einer tatsächlichen Anstiegsgeschwindigkeit ansteigt, die in °C/Minute gemessen wird, und wobei die tatsächliche Anstiegsgeschwindigkeit mindestens 45 Minuten innerhalb von 0,5 °C/Minute einer vorbestimmten Anstiegsgeschwindigkeit verbleibt.

11. Reaktionsmischung nach Anspruch 10, wobei die vorbestimmte Anstiegsgeschwindigkeit weniger als 2 °C/ Minute beträgt.

12. Reaktionsmischung nach Anspruch 1, wobei die Wärme erzeugenden Teilchen unbeschichtete Teilchen umfassen.

13. Reaktionsmischung nach Anspruch 12, wobei die Wärme erzeugenden Teilchen Mischungen aus unbeschichteten Teilchen, ersten beschichteten Teilchen und zweiten beschichteten Teilchen umfassen.

14. Verfahren zum Erzeugen von Wärme, wobei das Verfahren die folgenden Schritte umfasst:
a) Bereitstellen der Wärme erzeugenden Teilchen nach Anspruch 1; und
b) Hinzufügen einer wässrigen Lösung zu den beschichteten Wärme erzeugenden Teilchen.

15. Verfahren nach Anspruch 14, ferner umfassend die folgenden Schritte:
a) Bereitstellen eines Puffers; und
b) Hinzufügen des Puffers zu der wässrigen Lösung und den Wärme erzeugenden Teilchen.

16. Vorrichtung zum Erzeugen von Wärme, umfassend einen Behälter und die Wärme erzeugenden Teilchen nach Anspruch 1.

17. Vorrichtung nach Anspruch 16, wobei die Reaktionsmischung ferner einen Puffer umfasst.

18. Vorrichtung nach Anspruch 17, wobei eine Reaktionsmischung geschaffen wird, wenn die Wärme erzeugenden Teilchen mit einer wässrigen Lösung vermischt werden, und die Temperatur der Reaktionsmischung innerhalb von mindestens 20 Minuten auf eine festgelegte Temperatur ansteigt, die mehr als 40 °C und weniger als 75 °C beträgt.

19. Vorrichtung nach Anspruch 18, wobei die Reaktionsmischung mindestens 45 Minuten innerhalb von 15 °C der festgelegten Temperatur verbleibt.

20. Vorrichtung nach Anspruch 16, wobei die Wärme erzeugenden Teilchen in Form eines trockenen Pulvers vorliegen.

21. Vorrichtung nach Anspruch 16, wobei die Wärme erzeugenden Teilchen in einem Gel, einer nichtwässrigen Flüssigkeit und Mischungen davon suspendiert sind.

22. Reaktionsmischung nach Anspruch 2, wobei die Temperatur der Reaktionsmischung bei Vermischen der Wärme erzeugenden Teilchen und der wässrigen Lösung auf eine erste festgelegte Temperatur ansteigt und für einen ersten Zeitraum innerhalb von 15 °C der ersten festgelegten Temperatur verbleibt und die Temperatur der Reaktionsmischung danach zu einer zweiten festgelegten Temperatur wechselt und für einen zweiten Zeitraum innerhalb von 15 °C der zweiten festgelegten Temperatur verbleibt.

23. Reaktionsmischung nach Anspruch 22, wobei der erste Zeitraum mindestens 15 Minuten beträgt und der zweite Zeitraum mindestens 15 Minuten beträgt.

24. Reaktionsmischung nach Anspruch 22, wobei die erste festgelegte Temperatur mindestens 10 °C höher ist als die zweite festgelegte Temperatur.

25. Reaktionsmischung nach Anspruch 22, wobei die erste festgelegte Temperatur mindestens 10 °C niedriger ist als die zweite festgelegte Temperatur.

## Revendications

1. Mélange réactionnel exothermique qui génère de la chaleur par l'addition d'une solution aqueuse comprenant des particules génératrices d'exotherme comprenant un enrobage hydrosoluble qui revêt une partie des particules, où l'enrobage comprend un matériau choisi parmi le groupe constitué d'alkylène glycols hydrosolubles, d'alcools hydrosolubles, et leurs mélanges, et dans lequel les particules génératrices d'exotherme sont choisies parmi le groupe constitué de métaux non complexés, sels métalliques, oxydes métalliques, hydroxydes métalliques, hydrures métalliques et leurs mélanges, dans lequel les métaux sont choisis dans le groupe constitué de béryllium, magnésium, lithium, sodium, calcium, potassium, fer, cuivre, zinc, aluminium et leurs mélanges.

2. Mélange réactionnel selon la revendication 1, où le mélange réactionnel comprend, en outre, une solution aqueuse.

3. Mélange réactionnel selon la revendication 1, où le mélange réactionnel comprend, en outre, un tampon.

4. Mélange réactionnel selon la revendication 2, dans lequel lorsque les particules génératrices d'exotherme et la solution aqueuse sont mélangées ensemble, la température du mélange réactionnel augmente pour atteindre une température de consigne supérieure à 35 °C et inférieure à 75 °C, en moins de 20 minutes.

5. Mélange réactionnel selon la revendication 4, où le mélange réactionnel demeure dans un intervalle de 15 °C par raport à la température de consigne pendant au moins environ 45 minutes.

6. Mélange réactionnel selon la revendication 1, dans lequel les particules génératrices d'exotherme ont un diamètre des particules moyen allant de 10 microns à 1000 microns.

7. Mélange réactionnel selon la revendication 1, dans lequel les particules génératrices d'exotherme sont choisies dans le groupe constitué d'hydroxyde de béryllium, d'oxyde de béryllium, d'oxyde de béryllium monohydraté, d'hydrure de lithium-aluminium, d'oxyde de calcium, d'hydrure de calcium, d'oxyde de potassium, de chlorure de magnésium, de sulfate de magnésium, de bromure d'aluminium, d'iodure d'aluminium, de tétraborate de sodium, de phosphate de sodium et de leurs mélanges.

8. Mélange réactionnel selon la revendication 3, dans lequel le tampon est choisi dans le groupe constitué de l'acide citrique, l'acide maléique, l'acide fumarique, l'acide succinique, l'acide tartrique, l'acide formique, l'acide acétique, l'acide propanoïque, l'acide butyrique, l'acide valérique, l'acide oxalique, l'acide malonique, l'acide glutarique, l'acide adipique, l'acide glycolique, l'acide aspartique, l'acide pimélique, l'acide maléique, l'acide phtalique, l'acide isophtalique, l'acide téréphtalique, l'acide glutamique, l'acide lactique, l'acide hydroxyacrylique, l'acide alpha hydroxybutyrique, l'acide glycérique, l'acide tartronique, l'acide salicylique, l'acide gallique, l'acide mandélique, l'acide tropique, l'acide ascorbique, l'acide gluconique, l'acide cinnamique, l'acide benzoïque, l'acide phénylacétique, l'acide nicotinique, l'acide kaïnique, l'acide sorbique, l'acide pyrrolidonecarboxylique, l'acide trimellitique, l'acide benzènesulfonique, l'acide toluènesulfonique, du dihydrogénophosphate de potassium, de l'hydrogénosulfite de sodium, du dihydrogénophosphate de sodium, de l'hydrogénosulfite de potassium, de l'hydrogénopyrosulfite de sodium, de l'hexamétaphosphate de sodium acide, du pyrophosphate de sodium acide, du pyrophosphate de potassium acide, de l'acide sulfamique, de l'acide ortho-phosphorique, de l'acide pyrophosphorique et de leurs mélanges.

9. Mélange réactionnel selon la revendication 3, dans lequel le rapport pondéral des particules génératrices d'exotherme et du tampon est dans la gamme de 1000:1 à 1:1000.

10. Mélange réactionnel selon la revendication 2, dans lequel lorsque les particules génératrices d'exotherme et la solution aqueuse sont mélangées ensemble, la température du mélange réactionnel augmente à une vitesse réelle d'augmentation qui est mesurée en °C/minute, et la vitesse réelle d'augmentation demeure dans un intervalle de 0,5 °C/minute par rapport à une vitesse d'augmentation prédéterminée pendant au moins 45 minutes.

11. Mélange réactionnel selon la revendication 10, dans lequel la vitesse d'augmentation prédéterminée est inférieure à 2 °C/minute.

12. Mélange réactionnel selon la revendication 1, dans lequel les particules génératrices d'exotherme comprennent des particules non enrobées.

13. Mélange réactionnel selon la revendication 12, dans lequel les particules génératrices d'exotherme comprennent des mélanges de particules non enrobées, de premières particules enrobées et de deuxièmes particules enrobées.

14. Procédé pour générer de la chaleur, le procédé comprenant les étapes consistant à:
a) fournir les particules génératrices d'exotherme selon la revendication 1; et
b) ajouter une solution aqueuse aux particules génératrices d'exotherme enrobées.

15. Procédé selon la revendication 14, comprenant, en outre, les étapes consistant à:
a) fournir un tampon; et
b) ajouter le tampon à la solution aqueuse et aux particules génératrices d'exotherme.

16. Appareil pour générer de la chaleur comprenant un récipient et les particules génératrices d'exotherme selon la revendication 1.

17. Appareil selon la revendication 16, dans lequel le mélange réactionnel comprend, en outre, un tampon.

18. Appareil selon la revendication 17, dans lequel un mélange réactionnel est créé lorsque les particules génératrices d'exotherme sont mélangées ensemble avec une solution aqueuse, et que la température du mélange réactionnel augmente pour atteindre une température de consigne qui est supérieure à 40 °C et inférieure à 75 °C, en au moins 20 minutes.

19. Appareil selon la revendication 18, dans lequel le mélange réactionnel demeure dans un intervalle de 15 °C par rapport à la température de consigne pendant au moins 45 minutes.

20. Appareil selon la revendication 16, dans lequel les particules génératrices d'exotherme sont sous la forme d'une poudre sèche.

21. Appareil selon la revendication 16, dans lequel les particules génératrices d'exotherme sont en suspension dans un gel, un liquide non-aqueux et leurs mélanges.

22. Mélange réactionnel selon la revendication 2, dans lequel lorsque les particules génératrices d'exotherme et la solution aqueuse sont mélangées ensemble, la température du mélange réactionnel augmente pour atteindre une première température de consigne et demeure dans un intervalle de 15 °C par rapport à la première température de consigne pendant une première période de temps et ensuite, la température du mélange réactionnel change pour atteindre une deuxième température de consigne et demeure dans un intervalle de 15 °C par rapport à la deuxième température de consigne pendant une deuxième période de temps.

23. Mélange réactionnel selon la revendication 22, dans lequel la première période de temps est d'au moins 15 minutes et la deuxième période de temps est d'au moins 15 minutes.

24. Mélange réactionnel selon la revendication 22, dans lequel la première température de consigne est d'au moins 10 °C supérieure à la deuxième température de consigne.

25. Mélange réactionnel selon la revendication 22, dans lequel la première température de consigne est d'au moins 10 °C inférieure à la deuxième température de consigne.
